# FASCICULE DE BREVET EUROPEEN

(11) **EP 3 967 861 B1**
(45) Date de publication et mention de la délivrance du brevet: **04.01.2023**
(21) Numéro de dépôt: 21193422.9
(22) Date de dépôt: 27.08.2021
(51) Int. Cl.: F02C 7/06, F02C 7/22

(54) **SYSTÈME DE DRAINAGE D'UN MOTEUR À COMBUSTION D'AÉRONEF ET AÉRONEF ASSOCIÉ**
DRAINAGESYSTEM EINES LUFTFAHRZEUG-VERBRENNUNGSMOTORS UND ENTSPRECHENDES LUFTFAHRZEUG
SYSTEM FOR DRAINING A COMBUSTION ENGINE OF AN AIRCRAFT AND ASSOCIATED AIRCRAFT

(30) Priorité: 14.09.2020 FR 2009278
(43) Date de publication de la demande: 16.03.2022
(73) Titulaire: Airbus Helicopters, 13725 Marignane Cedex (FR)
(72) Inventeur: FORT, Patrick, 13005 MARSEILLE (FR); ALBERTINI, Christophe, 13240 SEPTEMES LES VALLONS (FR)
(74) Mandataire: GPI Brevets

(56) Documents cités:
- WO-A1-2019/115939
- FR-A1- 3 074 531
- US-A- 3 901 025
- US-A1- 2003 066 293
- US-A1- 2015 285 149

## Description

La présente invention concerne un système de drainage d'un moteur à combustion d'aéronef et un aéronef ainsi équipé d'un système de drainage. Un tel moteur peut par exemple se présenter sous la forme d'un turbomoteur ou d'un moteur à pistons.

Un tel système de drainage peut notamment être utile après un démarrage avorté du moteur qui peut être volontairement demandé ou encore en cas de panne du moteur.

Dans ce cas, du fluide tel que du carburant est alors présent dans la chambre de combustion du moteur. Le système de drainage permet d'évacuer ce fluide en dehors de la chambre de combustion pour permettre de relancer ultérieurement une phase de démarrage sans risque pour le moteur.

Ce système de drainage peut également permettre d'effectuer une opération de lavage et/ou de rinçage de la chambre de combustion avec un autre fluide tel que du liquide de lavage/rinçage moteur ou encore avec de l'eau.

De façon générale, et tel que décrit dans le document FR 3015567, il est connu d'utiliser des systèmes de drainage comportant des moyens de pompage des fluides contenus dans un collecteur et des moyens d'évacuation de ces fluides. Des moyens de surveillance sont configurés pour signaler une collecte anormale des fluides par le collecteur, ces moyens de surveillance étant configurés pour s'activer lorsque le débit de fluides collectés est supérieur au débit des moyens de pompage.

Cependant, de tels moyens de pompage et de surveillance augmentent la masse de l'aéronef et réduisent par conséquent la charge admissible, l'autonomie et/ou les performances de vol de l'aéronef. Par conséquent, de tels systèmes de drainage peuvent être pénalisants pour des aéronefs tels que notamment des giravions ou des hélicoptères pour lesquels la masse peut être un facteur important.

En outre de tels systèmes de drainage peuvent être complexes à réaliser. De tels systèmes de drainage peuvent présenter un grand nombre de pièces en mouvement nécessitant des opérations de maintenance longues et couteuses pour remplacer ces éléments préventivement ou encore en cas de panne de l'un d'eux.

Le document US 2003/066293 décrit quant à lui un système de drainage comportant une valve témoin 70 formant boîtier de ségrégation. Une entrée 63 comportant une portion tubulaire est alors agencée en regard d'une sortie 65 comportant une autre portion tubulaire. Telles que représentées, ces portions tubulaires sont agencées coaxialement en regard l'une de l'autre mais de manière distante.

Un tel agencement de l'entrée et de la sortie du boîtier ne permet alors pas d'aspirer de manière optimale le fluide présent dans une canalisation en communication avec l'entrée.

Les documents US 2015/285149, US 3901025, FR 3074531 et WO 2019/115939 décrivent quant à eux d'autres types de système de drainage plus éloignés de l'invention.

La présente invention a alors pour objet de proposer un système de drainage et un aéronef permettant de s'affranchir des limitations mentionnées ci-dessus. Un objectif de l'invention est donc de fournir un système de drainage d'un moteur à combustion pour aéronef qui soit simple, très fiable et de masse réduite pour ne pas pénaliser la charge admissible, l'autonomie et/ou les performances de vol de l'aéronef.

L'invention concerne donc un système de drainage, selon la revendication 1, pour drainer ur moteur à combustion d'aéronef, le système de drainage étant configuré pour collecter au moins un fluide présent à l'intérieur du moteur à combustion, le système de drainage comportant au moins un conduit d'évacuation permettant de canaliser le au moins un fluide en dehors du moteur à combustion, le au moins un fluide comportant au moins un liquide et au moins un gaz, le système de drainage comportant :
- un boîtier de ségrégation configuré pour séparer le au moins un liquide et le au moins un gaz, le boîtier de ségrégation comportant une entrée, une première sortie et une seconde sortie, l'entrée étant agencée en communication fluidique avec le conduit d'évacuation, l'entrée comportant une première portion tubulaire se prolongeant à l'intérieur du boîtier de ségrégation et la seconde sortie comportant une seconde portion tubulaire se prolongeant à l'intérieur du boîtier de ségrégation, la première portion tubulaire étant agencée coaxialement avec la seconde portion tubulaire,
- une durite comportant une première extrémité reliée à la première sortie du boîtier de ségrégation pour collecter par gravité uniquement le au moins un liquide,
- un tuyau comportant une extrémité proximale reliée à la seconde sortie du boîtier de ségrégation pour évacuer uniquement le au moins un gaz.

Autrement dit, un tel boîtier de ségrégation forme pour le ou les fluides arrivant à l'entrée un moyen simple permettant d'orienter par gravité le ou les liquides vers la première sortie et le ou les gaz vers la seconde sortie.

Le ou les liquides ne peuvent pas sortir du boîtier de ségrégation par la seconde sortie car une force gravitationnelle terrestre appliquée au(x) liquide(s) permet de les orienter vers le bas en direction de la première sortie du boîtier de ségrégation.

Le ou les liquides peuvent comporter par exemple du carburant ou de l'huile. De tels liquides peuvent par exemple atteindre des températures inférieures à 300°C. La durite qui est en communication fluidique avec la première sortie est ainsi adaptée pour permettre de canaliser ce ou ces liquides dans une zone éloignée du moteur évitant ainsi tout risque d'incendie causé par l'échauffement de ces liquides qui peuvent être inflammables.

Le ou les gaz peuvent quant à eux comprendre par exemple de l'air chaud, dont la température peut être très élevée, notamment supérieure à 300°C, voire à 400°C. Ce ou ces gaz sont quant à eux orientés vers la deuxième sortie et donc dans le tuyau qui est adapté pour résister à ces températures élevées. La durite peut quant à elle être formée dans un matériau moins résistant aux températures élevées.

Ainsi, la première portion tubulaire peut traverser en tout ou partie un corps du boîtier de ségrégation suivant une direction sensiblement rectiligne. Une telle première portion tubulaire peut être par exemple solidarisée avec le corps via un procédé d'assemblage non réversible par exemple par collage ou soudage. Alternativement, la première portion tubulaire peut former avec le corps un ensemble monolithique fabriqué au moyen d'un procédé de fabrication par moulage, usinage ou encore par une superposition de couches de matière successives.

De même, la seconde portion tubulaire peut traverser en tout ou partie le corps du boîtier de ségrégation suivant une direction sensiblement rectiligne. Une telle seconde portion tubulaire peut être par exemple solidarisée avec le corps via un procédé d'assemblage non réversible par exemple par collage ou soudage. Alternativement, la seconde portion tubulaire peut également former avec le corps un ensemble monolithique fabriqué au moyen d'un procédé de fabrication par moulage, usinage ou encore par une superposition de couches de matière successives.

Par suite, les directions sensiblement rectilignes selon lesquelles s'étendent respectivement la première portion tubulaire et la seconde portion tubulaire peuvent être avantageusement confondues.

En outre, la première portion tubulaire présentant un premier diamètre et la seconde portion tubulaire présentant un second diamètre, le premier diamètre peut être inférieur au second diamètre.

Autrement dit, la première portion tubulaire possède une section de passage pour le au moins un fluide inférieure à la section de passage pour le ou les gaz.

Selon l'invention, un tel système de drainage est remarquable en ce que la première portion tubulaire est agencée au moins partiellement dans une zone intérieure de la seconde portion tubulaire.

En d'autres termes, la première portion tubulaire pénètre à l'intérieure de la seconde portion tubulaire. Par suite, une aspiration du au moins un fluide présent dans le au moins un conduit d'évacuation peut être réalisée par le déplacement du ou des gaz s'échappant par la seconde sortie et donc ensuite par le tuyau.

Le ou les liquides peuvent alors s'écouler par gravité depuis la première portion tubulaire sur la seconde portion tubulaire avant d'atteindre la première sortie du boîtier de ségrégation.

Selon un exemple particulier de réalisation de l'invention, le boîtier de ségrégation peut comporter un corps et un couvercle amovible, le couvercle amovible présentant une attache pour être solidarisé et alternativement désolidarisé de manière réversible avec le corps.

Ainsi, un opérateur peut ouvrir de manière réversible le boîtier de ségrégation par exemple pour effectuer une opération de maintenance, de nettoyage et simplement de contrôle du bon fonctionnement d'un boîtier de ségrégation. Des particules ou saletés peuvent en effet venir obstruer l'entrée, la première sortie ou la seconde sortie à l'intérieur du corps.

Par ailleurs, au moins lorsque l'aéronef équipé du système est posé sur une aire d'atterrissage, la première sortie peut être agencée en dessous de l'entrée et de la seconde sortie pour permettre un écoulement par gravité du au moins un liquide à l'intérieur du boîtier de ségrégation.

Autrement dit, l'entrée et la seconde sortie sont alors agencées au dessus de la première sortie suivant une direction verticale ascendante.

Avantageusement, une seconde extrémité de la durite peut coopérer avec un réservoir dédié de collecte du au moins un liquide

Ainsi, un tel réservoir de collecte permet de stocker puis ultérieurement de traiter le ou les liquides et/ou de les recycler.

En pratique, la durite peut être formée dans un matériau polymère thermoplastique.

En effet, un tel matériau est avantageusement chimiquement résistant aux différents liquides qu'il peut acheminer. Il est léger, souple et facilement conformable pour suivre des cheminements complexes à l'intérieur du fuselage d'un aéronef. Par exemple, une telle durite peut être formée en polytétrafluoroéthylène (PTFE) et peut notamment résister à des températures élevées comprises par exemple entre 100°C et 300°C. Eventuellement, la durite peut présenter plusieurs tronçons raccordés entre eux.

La présente invention concerne également un aéronef comportant au moins un moteur à combustion et au moins un système de drainage.

Selon l'invention un tel aéronef est remarquable en ce que le système de drainage est tel que décrit ci-dessus.

Autrement dit, un tel aéronef comporte au moins un système de drainage comportant :
- un boîtier de ségrégation configuré pour séparer le au moins un liquide et le ou les gaz, le boîtier de ségrégation comportant une entrée, une première sortie et une seconde sortie, l'entrée étant agencée en communication fluidique avec le conduit d'évacuation,
- une durite comportant une première extrémité reliée à la première sortie du boîtier de ségrégation pour collecter par gravité uniquement le au moins un liquide,
- un tuyau comportant une extrémité proximale reliée à la seconde sortie du boîtier de ségrégation pour évacuer uniquement le ou les gaz.

Avantageusement, l'aéronef peut comporter au moins un clapet pour ouvrir et alternativement obturer le conduit d'évacuation.

Ce ou ces clapets permettent par exemple de condamner le système de drainage lors du fonctionnement du moteur à combustion équipant l'aéronef.

En pratique, le au moins un clapet peut ouvrir et alternativement fermer le conduit d'évacuation en fonction d'une pression régnant à l'intérieur du moteur à combustion.

Ce ou ces clapets peuvent alors être autonomes et fonctionner automatiquement sans nécessiter l'utilisation d'un système de commande dédié.

En outre, le au moins un clapet peut ouvrir le conduit d'évacuation lorsque la pression régnant à l'intérieur du moteur à combustion est inférieure à une valeur de seuil prédéterminée et alternativement ferme le conduit d'évacuation lorsque la pression régnant à l'intérieur du moteur à combustion est supérieure à une valeur de seuil prédéterminée.

Par suite, lorsque le moteur à combustion est à l'arrêt la pression régnant dans le moteur à combustion correspond à la pression atmosphérique et le ou les clapets sont agencés dans une position d'ouverture pour laisser ouvert le conduit d'évacuation du système de drainage.

Lors du démarrage du moteur à combustion la pression augmente à l'intérieur du moteur jusqu'à atteindre la valeur de seuil prédéterminée et la dépasser. Lorsque la pression à l'intérieur du moteur atteint la valeur de seuil prédéterminée alors le ou les clapets se referment et empêchent ainsi le ou les fluides de circuler dans le conduit d'évacuation.

Le ou les clapets peuvent par exemple être agencés au niveau d'un carter du moteur à combustion et être au nombre de deux pour permettre le drainage du ou des fluides dans deux parties distinctes du moteur et/ou quel que soit un angle de piqué ou de cabrage de l'aéronef. Dans ce cas, le conduit d'évacuation est dédoublé en deux tronçons primaires qui se rejoignent au niveau d'un raccord. Le conduit d'évacuation comporte alors ensuite un tronçon secondaire qui s'étend entre le raccord et l'entrée du boîtier de ségrégation.

En outre, le boîtier de ségrégation étant agencé dans une partie supérieure de l'aéronef, la durite peut comporter une seconde extrémité agencée dans une partie inférieure de l'aéronef, la partie inférieure étant agencée en dessous de la partie supérieure au moins lorsque l'aéronef équipé du système est posé sur une aire d'atterrissage.

En d'autres termes, la première extrémité de la durite est agencée au dessus de la seconde extrémité de la durite suivant une direction verticale ascendante. La partie inférieure de l'aéronef est alors éloignée du ou des moteurs de l'aéronef et par conséquent des différents éléments sources de chaleur. La force gravitationnelle terrestre permet alors de faire s'écouler librement le ou les liquides dans la durite sans nécessiter l'ajout d'une pompe ou analogue.

Par ailleurs, le tuyau peut comporter une extrémité distale agencée dans une tuyère secondaire permettant de canaliser des gaz de refroidissement, la tuyère secondaire étant agencée autour d'une tuyère primaire permettant de canaliser des gaz d'échappement du moteur à combustion, les gaz de refroidissement permettant de refroidir les gaz d'échappement.

Ainsi, le ou les gaz contenus dans le tuyau peuvent être aspirés par les gaz de refroidissement circulant entre la tuyère primaire et la tuyère secondaire. Ainsi, le ou les gaz contenus dans le ou les fluides drainés par le système de drainage peuvent être évacués avec les gaz de refroidissement du moteur dans une partie supérieure opposée à la partie inférieure de l'aéronef.

L'invention et ses avantages apparaîtront avec plus de détails dans le cadre de la description qui suit avec des exemples donnés à titre illustratif en référence aux figures annexées qui représentent :
la figure 1, une vue de côté d'un aéronef comportant un système de drainage conforme à l'invention,
la figure 2, un premier schéma illustrant un système de drainage conforme à l'invention,
la figure 3, un second schéma illustrant un système de drainage conforme à l'invention,
la figure 4, une vue en perspective d'un boîtier de ségrégation d'un système de drainage conforme à l'invention, et
la figure 5, une vue en coupe transversale d'un boîtier de ségrégation d'un système de drainage conforme à l'invention.

Les éléments présents dans plusieurs figures distinctes sont affectés d'une seule et même référence.

Comme déjà évoqué, l'invention concerne donc un système de drainage d'un moteur à combustion d'aéronef et un aéronef associé.

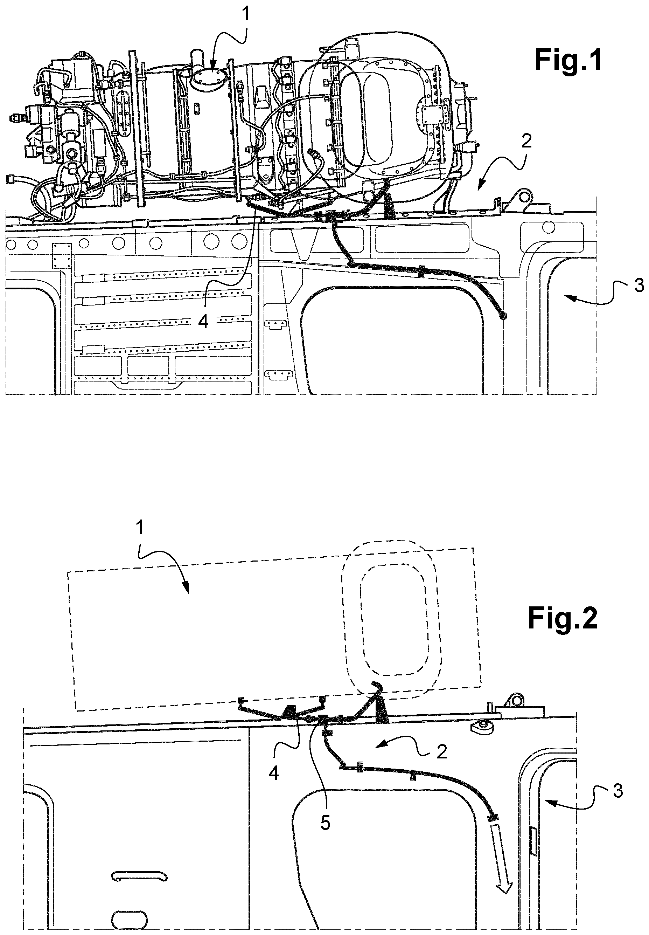

Tel que représenté à la figure 1, un aéronef 3 tel que par exemple un giravion ou un hélicoptère comporte un moteur à combustion 1 tel que par exemple un turbomoteur. En outre, un tel moteur à combustion 1 peut présenter des fluides qu'il peut être utile de drainer en dehors du moteur 1 préalablement à un démarrage de celui-ci. Un système de drainage 2 peut alors équiper l'aéronef 3 et être configuré pour évacuer le ou les fluides au moins au travers d'un conduit de canalisation 4.

En pratique, ce ou ces fluides peuvent comporter au moins un liquide et au moins un gaz qui peuvent être évacués dans le conduit d'évacuation 4. Le liquide peut être par exemple formé par du carburant lorsque le moteur rate une phase de démarrage. Le ou les gaz peuvent quant à eux être formés par des gaz chauds de combustion lorsque le moteur démarre mais que le ou les clapets restent au moins partiellement dans une position ouverte.

Tel que représenté à la figure 2, un tel système de drainage 2 comporte également un boîtier de ségrégation 5 configuré pour séparer automatiquement par gravité le ou les liquides et le ou les gaz.

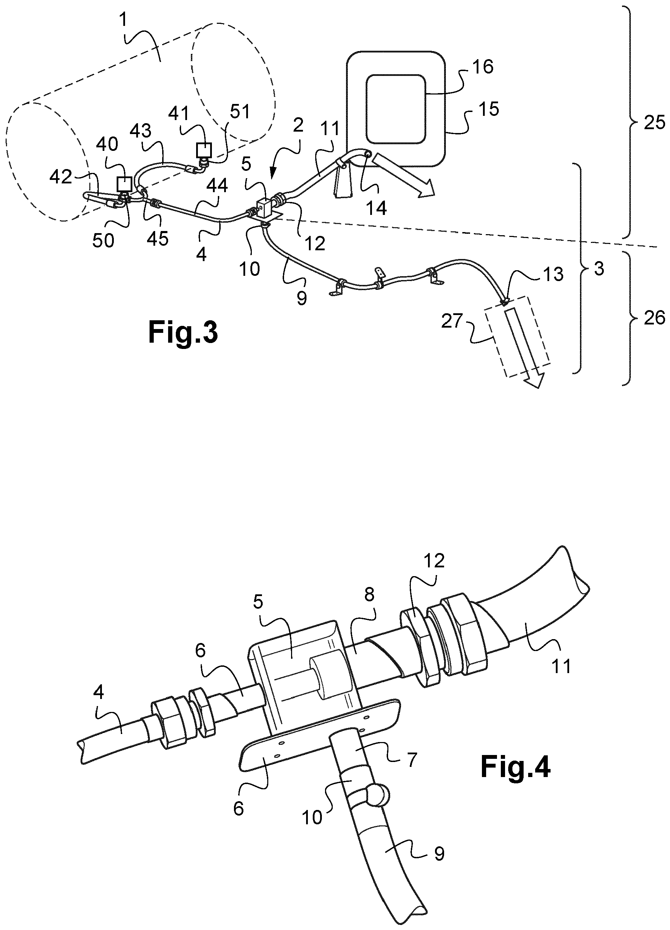

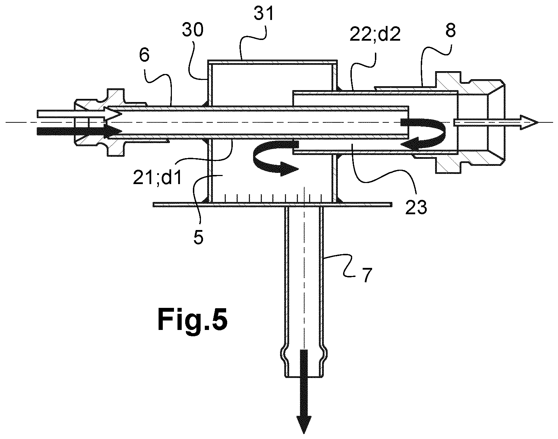

Tel que représenté aux figures 4 et 5, un tel boîtier de ségrégation 5 comporte une entrée 6, une première sortie 7 et une seconde sortie 8. L'entrée 6 est alors agencée en communication fluidique avec le conduit d'évacuation 4 pour recevoir le ou les fluides collectés par gravité dans le moteur à combustion 3

Tel que représenté à la figure 3, le système de drainage 2 peut comporter au moins un clapet et par exemple deux clapets 40, 41 pour simultanément ouvrir ou obturer le conduit d'évacuation 4.

Ces clapets 40, 41 sont connectés respectivement avec deux raccords à visser 50, 51 au niveau des drains du moteur à combustion 1. Ces raccords à visser 50, 51 forment alors une partie du conduit d'évacuation 4. Par conséquent, les clapets 40, 41, qui peuvent être par exemple agencés à l'intérieur du moteur à combustion 1, ouvrent ou ferment le conduit d'évacuation 4 en fonction d'une pression régnant à l'intérieur du moteur à combustion 1. Dans ce cas, chaque clapet 40, 41 coopère, au niveau des raccords à visser 50, 51, avec une extrémité d'un tronçon primaire 42 et 43 du conduit d'évacuation 4. Ces deux tronçons primaires 42 et 43 du conduit d'évacuation 4 permettent de collecter le ou les fluides simultanément dans deux zones distinctes du moteur à combustion 1.

Les deux tronçons primaires 42 et 43 se rejoignent au niveau d'un raccord 45. Le conduit d'évacuation 4 comporte alors ensuite un tronçon secondaire 44 qui s'étend entre le raccord 45 et l'entrée 6 du boîtier de ségrégation 5.

En outre, les clapets 40, 41 sont avantageusement configurés pour ouvrir le conduit d'évacuation 4 lorsque la pression régnant à l'intérieur du moteur à combustion 1 est inférieure à une valeur de seuil prédéterminée ou pour fermer le conduit d'évacuation 4 lorsque la pression régnant à l'intérieur du moteur à combustion 1 est supérieure à une valeur de seuil prédéterminée.

Par ailleurs, le système de drainage 2 comporte également une durite 9 comportant une première extrémité 10 connectée avec la première sortie 7 du boîtier de ségrégation 5. Une telle durite 9 permet ainsi de collecter par gravité uniquement le ou les liquides préalablement collectés dans le moteur à combustion 1. Une telle durite 9 peut éventuellement comporter plusieurs tronçons connectés entre eux.

En outre, le boîtier de ségrégation 5 est par exemple agencé dans une partie supérieure 25 de l'aéronef 3 opposée à une partie inférieure 26 selon une direction verticale. La partie inférieure 26 est par suite agencée en dessous de la partie supérieure 25 au moins lorsque l'aéronef 3 équipé du système de drainage 2 est posé sur une aire d'atterrissage par exemple au sol.

La durite 9 peut alors s'étendre entre la partie supérieure 25 et la partie inférieure 26. Cette durite 9 comporte ainsi une seconde extrémité 13 agencée dans la partie inférieure 26 de l'aéronef 3.

En pratique, la seconde extrémité 13 de la durite 9 peut ainsi être connectée à un réservoir dédié 27 configuré pour collecter le ou les liquides. Le ou les liquides peuvent alors être au moins temporairement stockés dans le réservoir dédié 27 lors d'une mission de l'aéronef 3 puis le réservoir dédié 27 peut être vidé une fois la mission achevée. Le ou les liquides issus du fluide drainé dans le moteur à combustion 1 peuvent alors être traités et/ou recyclés ultérieurement.

Un tel système de drainage 2 est muni également d'un tuyau 11 comportant une extrémité proximale 12 connectée à la seconde sortie 8 du boîtier de ségrégation 5. Un tel tuyau 11 permet alors d'évacuer uniquement le ou les gaz contenus dans le fluide drainé dans le moteur à combustion 1.

Tel que représenté en détail à la figure 5, l'entrée 6 peut comporter une première portion tubulaire 21 se prolongeant à l'intérieur du boîtier de ségrégation 5 et la seconde sortie 8 peut également comporter une seconde portion tubulaire 22 se prolongeant à l'intérieur du boîtier de ségrégation 5.

Par ailleurs, la première portion tubulaire 21 peut être agencée coaxialement avec la seconde portion tubulaire 22. De plus, cette première portion tubulaire 21 présente un premier diamètre d1 choisi inférieur à un second diamètre d2 de la seconde portion tubulaire 22. La première portion tubulaire 21 peut alors présenter une extrémité libre agencée au moins partiellement dans une zone intérieure 23 de la seconde portion tubulaire 22.

Un tel agencement est particulièrement avantageux pour permettre au(x) gaz contenus dans le ou les fluides d'être ensuite évacués par la seconde sortie 8 et le tuyau 11. Une inclinaison du boîtier de ségrégation 5, telle que représentée à la figure 4, permet alors de positionner la seconde sortie 8 au dessus de l'entrée 7. Le ou les liquides une fois sortis de la première portion tubulaire 21 tombent alors par gravité au niveau de la zone intérieure 23 qui est avantageusement inclinée et permet de les orienter vers une extrémité libre de la seconde portion tubulaire 22 située à l'intérieur du boîtier de ségrégation 5.

Le ou les liquides une fois sortis de la seconde portion tubulaire 22 tombent alors par gravité une nouvelle fois au niveau d'un fond boîtier de ségrégation 5. La première sortie 7 est agencée au niveau de ce fond du boîtier de ségrégation 5 et peut alors collecter par gravité le ou les liquides.

Selon un exemple de réalisation avantageux, le boîtier de ségrégation 5 peut comporter un corps 30 présentant l'entrée 6, la première sortie 7 et la seconde sortie 8. En pratique, l'entrée 6, la première sortie 7 et la seconde sortie 8 peuvent être rapportées et soudées ou collées avec le corps 30. Selon d'autres exemples non représentés, l'entrée, la première sortie et la seconde sortie peuvent former avec le corps 30 un ensemble monolithique dès sa fabrication par exemple par un procédé de moulage ou encore par un procédé de fabrication de superposition additive couche par couche.

Quel que soit le mode de fabrication du corps 30, le boîtier de ségrégation 5 peut comporter également un couvercle amovible 31 rapporté sur le corps 30. Un tel couvercle amovible 31 peut alors au moyen d'une attache être solidarisé et alternativement désolidarisé de manière réversible avec le corps 30 pour notamment permettre à un opérateur de réaliser périodiquement une inspection de l'intérieur du boîtier de ségrégation 5.

De cette manière, il est possible de contrôler le bon fonctionnement du boîtier de ségrégation 5 et éventuellement de le nettoyer si cela est possible ou bien de le remplacer le cas échéant.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Système de drainage (2) pour drainer un moteur à combustion (1) d'aéronef (3), ledit système de drainage (2) étant configuré pour collecter au moins un fluide présent à l'intérieur dudit moteur à combustion (1), ledit système de drainage (2) comportant au moins un conduit d'évacuation (4) permettant de canaliser ledit au moins un fluide en dehors dudit moteur à combustion (1), ledit au moins un fluide comportant au moins un liquide et au moins un gaz, ledit système de drainage (2) comportant :
• un boîtier de ségrégation (5) configuré pour séparer ledit au moins un liquide et ledit au moins un gaz, ledit boîtier de ségrégation (5) comportant une entrée (6), une première sortie (7) et une seconde sortie (8), ladite entrée (6) étant agencée en communication fluidique avec ledit conduit d'évacuation (4), ladite entrée (6) comportant une première portion tubulaire (21) se prolongeant à l'intérieur dudit boîtier de ségrégation (5) et ladite seconde sortie (8) comportant une seconde portion tubulaire (22) se prolongeant à l'intérieur dudit boîtier de ségrégation (5), ladite première portion tubulaire (21) étant agencée coaxialement avec ladite seconde portion tubulaire (22),
• une durite (9) comportant une première extrémité (10) reliée à ladite première sortie (7) dudit boîtier de ségrégation (5) pour collecter par gravité uniquement ledit au moins un liquide,
• un tuyau (11) comportant une extrémité proximale (12) reliée à ladite seconde sortie (8) dudit boîtier de ségrégation (5) pour évacuer uniquement ledit au moins un gaz,
**caractérisé en ce que** ladite première portion tubulaire (21) est agencée au moins partiellement dans une zone intérieure (23) de ladite seconde portion tubulaire (22).

2. Système selon la revendication 1,
**caractérisé en ce que** ladite première portion tubulaire (21) présentant un premier diamètre (d1) et ladite seconde portion tubulaire (22) présentant un second diamètre (d2), ledit premier diamètre (d1) est inférieur audit second diamètre (d2).

3. Système selon l'une quelconque des revendications 1 à 2, **caractérisé en ce que** ledit boîtier de ségrégation (5) comporte un corps (30) et un couvercle amovible (31), ledit couvercle amovible (31) présentant une attache pour être solidarisé et alternativement désolidarisé de manière réversible avec ledit corps (30).

4. Système selon l'une quelconque des revendications 1 à 3, **caractérisé en ce que**, lorsque ledit aéronef (3) équipé dudit système (2) est posé sur une aire d'atterrissage, ladite première sortie (7) est agencée en dessous de ladite entrée (6) et de ladite seconde sortie (8) pour permettre un écoulement par gravité dudit au moins un liquide à l'intérieur dudit boîtier de ségrégation (5).

5. Système selon l'une quelconque des revendications 1 à 4, **caractérisé en ce qu'**une seconde extrémité (13) de ladite durite (9) coopère avec un réservoir dédié (27) de collecte dudit au moins un liquide.

6. Système selon l'une quelconque des revendications 1 à 5, **caractérisé en ce que** ladite durite (9) est formée dans un matériau polymère thermoplastique.

7. Aéronef (3) comportant au moins un moteur à combustion (1) et au moins un système de drainage (2),
**caractérisé en ce que** ledit système de drainage (2) est selon l'une quelconque des revendications 1 à 6.

8. Aéronef (3) selon la revendication 7,
**caractérisé en ce que** ledit aéronef (3) comporte au moins un clapet (40, 41) pour ouvrir et alternativement obturer ledit conduit d'évacuation (4).

9. Aéronef (3) selon l'une quelconque des revendications 6 à 7, **caractérisé en ce que**, ledit boîtier de ségrégation (5) étant agencé dans une partie supérieure (25) dudit aéronef (3), ladite durite (9) comporte une seconde extrémité (13) agencée dans une partie inférieure (26) dudit aéronef (3), ladite partie inférieure (26) étant agencée en dessous de ladite partie supérieure (25) lorsque ledit aéronef (3) équipé dudit système (2) est posé sur une aire d'atterrissage.

10. Aéronef (3) selon l'une quelconque des revendications 6 à 8, **caractérisé en ce que** ledit tuyau (11) comporte une extrémité distale (14) agencée dans une tuyère secondaire (15) permettant de canaliser des gaz de refroidissement, ladite tuyère secondaire (15) étant agencée autour d'une tuyère primaire (16) permettant de canaliser des gaz d'échappement dudit moteur à combustion (1), lesdits gaz de refroidissement permettant de refroidir lesdits gaz d'échappement.

## Patentansprüche

1. Drainagesystem (2) zum Entwässern eines Verbrennungsmotors (1) eines Luftfahrzeugs (3), wobei das Drainagesystem (2) konfiguriert ist, um mindestens ein im Inneren des Verbrennungsmotors (1) vorhandenes Fluid zu sammeln, wobei das Drainagesystem (2) mindestens eine Auslassleitung (4) umfasst, die es ermöglicht, das mindestens eine Fluid aus dem Verbrennungsmotor (1) auszuleiten, wobei das mindestens eine Fluid mindestens eine Flüssigkeit und mindestens ein Gas umfasst, wobei das Drainagesystem (2) umfasst:
- ein Abscheidegehäuse (5), das konfiguriert ist, um die mindestens eine Flüssigkeit und das mindestens eine Gas zu trennen, wobei das Abscheidegehäuse (5) einen Einlass (6), einen ersten Auslass (7) und einen zweiten Auslass (8) aufweist, wobei der Einlass (6) in Fluidverbindung mit der Auslassleitung (4) angeordnet ist, der Einlass (6) einen ersten rohrförmigen Abschnitt (21) aufweist, der sich in das Abscheidegehäuse (5) hinein erstreckt, und der zweite Auslass (8) einen zweiten rohrförmigen Abschnitt (22) aufweist, der sich in das Abscheidegehäuse (5) hinein erstreckt, wobei der erste rohrförmige Abschnitt (21) koaxial mit dem zweiten rohrförmigen Abschnitt (22) angeordnet ist,
- einen Schlauch (9) mit einem ersten Ende (10), das mit dem ersten Auslass (7) des Abscheidegehäuses (5) verbunden ist, um durch Schwerkraft nur die mindestens eine Flüssigkeit zu sammeln,
- ein Rohr (11) mit einem proximalen Ende (12), das mit dem zweiten Auslass (8) des Abscheidegehäuses (5) verbunden ist, um nur das mindestens eine Gas abzuleiten,
**dadurch gekennzeichnet, dass** der erste rohrförmige Abschnitt (21) zumindest teilweise in einem inneren Bereich (23) des zweiten rohrförmigen Abschnitts (22) angeordnet ist.

2. System nach Anspruch 1,
**dadurch gekennzeichnet, dass** der erste rohrförmige Abschnitt (21) einen ersten Durchmesser (d1) aufweist und der zweite rohrförmige Abschnitt (22) einen zweiten Durchmesser (d2) aufweist, wobei der erste Durchmesser (d1) kleiner als der zweite Durchmesser (d2) ist.

3. System nach einem der Ansprüche 1 bis 2,
**dadurch gekennzeichnet, dass** das Abscheidegehäuse (5) einen Körper (30) und einen abnehmbaren Deckel (31) umfasst, wobei der abnehmbare Deckel (31) eine Befestigung aufweist, um reversibel mit dem Körper (30) fest verbunden und alternativ davon getrennt zu sein.

4. System nach einem der Ansprüche 1 bis 3,
**dadurch gekennzeichnet, dass**, wenn das mit dem System (2) ausgestattete Luftfahrzeug (3) auf einem Landeplatz steht, der erste Auslass (7) unterhalb des Einlasses (6) und des zweiten Auslasses (8) angeordnet ist, um einen durch Schwerkraft getriebenen Fluss der mindestens einen Flüssigkeit innerhalb des Abscheidegehäuses (5) zu ermöglichen.

5. System nach einem der Ansprüche 1 bis 4,
**dadurch gekennzeichnet, dass** ein zweites Ende (13) des Schlauchs (9) mit einem dedizierten Behälter (27) zum Sammeln der mindestens einen Flüssigkeit zusammenwirkt.

6. System nach einem der Ansprüche 1 bis 5,
**dadurch gekennzeichnet, dass** der Schlauch (9) aus einem thermoplastischen Polymermaterial gebildet ist.

7. Luftfahrzeug (3) mit mindestens einem Verbrennungsmotor (1) und mindestens einem Drainagesystem (2),
**dadurch gekennzeichnet, dass** das Drainagesystem (2) gemäß einem der Ansprüche 1 bis 6 ist.

8. Luftfahrzeug (3) nach Anspruch 7,
**dadurch gekennzeichnet, dass** das Luftfahrzeug (3) mindestens ein Ventil (40, 41) zum wahlweisen Öffnen und Verschließen der Drainageleitung (4) aufweist.

9. Luftfahrzeug (3) nach einem der Ansprüche 6 bis 7,
**dadurch gekennzeichnet, dass** das Abscheidegehäuse (5) in einem oberen Teil (25) des Luftfahrzeugs (3) angeordnet ist, dass der Schlauch (9) ein zweites Ende (13) aufweist, das in einem unteren Teil (26) des Luftfahrzeugs (3) angeordnet ist, und dass der untere Teil (26) unterhalb des oberen Teils (25) angeordnet ist, wenn das mit dem System (2) ausgestattete Luftfahrzeug (3) auf einem Landeplatz steht.

10. Luftfahrzeug (3) nach einem der Ansprüche 6 bis 8,
**dadurch gekennzeichnet, dass** das Rohr (11) ein distales Ende (14) aufweist, das in einer Sekundärdüse (15) zum Leiten von Kühlgasen angeordnet ist, wobei die Sekundärdüse (15) um eine Primärdüse (16) zum Leiten von Abgasen des Verbrennungsmotors (1) herum angeordnet ist, wobei die Kühlgase das Kühlen der Abgase ermöglichen.

## Claims

1. Drainage system (2) for draining a combustion engine (1) of an aircraft (3), said drainage system (2) being configured to collect at least one fluid present inside said combustion engine (1), said drainage system (2) comprising at least one evacuation conduit (4) for channelling said at least one fluid outside said combustion engine (1), said at least one fluid comprising at least one liquid and at least one gas, said drainage system (2) comprising:
• a separation housing (5) configured to separate said at least one liquid and said at least one gas, said separation housing (5) comprising an inlet (6), a first outlet (7) and a second outlet (8), said inlet (6) being arranged in fluid communication with said evacuation conduit (4), said inlet (6) comprising a first tubular portion (21) extending into the interior of said separation housing (5) and said second outlet (8) comprising a second tubular portion (22) extending into the interior of said separation housing (5), said first tubular portion (21) being arranged coaxially with said second tubular portion (22),
• a flexible hose (9) comprising a first end (10) connected to said first outlet (7) of said separation housing (5) for collecting by gravity only said at least one liquid,
• a pipe (11) comprising a proximal end (12) connected to said second outlet (8) of said separation housing (5) for evacuating only said at least one gas,
**characterised in that** said first tubular portion (21) is arranged at least partially in an internal area (23) of said second tubular portion (22).

2. System according to claim 1,
**characterised in that**, said first tubular portion (21) having a first diameter (d1) and said second tubular portion (22) having a second diameter (d2), said first diameter (d1) is smaller than said second diameter (d2).

3. System according to any one of claims 1 to 2,
**characterised in that** said separation housing (5) comprises a body (30) and a removable cover (31), said removable cover (31) having a fastener for securing it to and in turn detaching it from said body (30) in a reversible manner.

4. System according to any one of claims 1 to 3,
**characterised in that**, when said aircraft (3) equipped with said system (2) is parked on a landing area, said first outlet (7) is arranged below said inlet (6) and said second outlet (8) to allow a flow by gravity of said at least one liquid inside said separation housing (5).

5. System according to any one of claims 1 to 4,
**characterised in that** a second end (13) of said flexible hose (9) cooperates with a dedicated reservoir (27) for collecting said at least one liquid.

6. System according to any one of claims 1 to 5,
**characterised in that** said flexible hose (9) is made of a thermoplastic polymer material.

7. Aircraft (3) comprising at least one combustion engine (1) and at least one drainage system (2),
**characterised in that** said drainage system (2) is according to any one of claims 1 to 6.

8. Aircraft (3) according to claim 7,
**characterised in that** said aircraft (3) comprises at least one valve (40, 41) for opening and in turn closing said evacuation conduit (4).

9. Aircraft (3) according to any one of claims 6 to 7,
**characterised in that**, said separation housing (5) being arranged in an upper part (25) of said aircraft (3), said flexible hose (9) comprises a second end (13) arranged in a lower part (26) of said aircraft (3), said lower part (26) being arranged below said upper part (25) when said aircraft (3) equipped with said system (2) is parked on a landing area.

10. Aircraft (3) according to any one of claims 6 to 8,
**characterised in that** said pipe (11) comprises a distal end (14) arranged in a secondary nozzle (15) for channelling cooling gases, said secondary nozzle (15) being arranged around a primary nozzle (16) for channelling exhaust gases from said combustion engine (1), said cooling gases allowing said exhaust gases to be cooled.
